# EUROPEAN PATENT SPECIFICATION

(11) **EP 2 867 108 B1**
(45) Date of publication and mention of the grant of the patent: **13.04.2016**
(21) Application number: 13742679.7
(22) Date of filing: 27.06.2013
(51) Int. Cl.: B62J 11/00, A42B 3/00, A47G 25/10

(54) **BICYCLE HELMET HOLDER**
FAHRRADHELMHALTERUNG
SUPPORT DE CASQUE DE BICYCLETTE

(30) Priority: 30.06.2012 GB 201211803; 21.09.2012 GB 201216880
(43) Date of publication of application: 06.05.2015
(73) Proprietor: Helmetor Limited, Fermanagh BT94 5PG (GB)
(72) Inventor: MCCREA, Timothy Lionel David, Fermanagh BT94 5PG (GB)
(74) Representative: Armstrong, Rosemary
(86) International application number: PCT/GB2013/051711
(87) International publication number: WO 2014/001812

(56) References cited:
- EP-A1- 1 064 190
- DE-U1-202006 008 019
- US-A- 5 664 444

## Description

The invention relates to a holder for use with a bicycle helmet, for attaching the helmet to a bicycle or to a wall, door, etc.

The use of bicycle helmets has steadily increased over the past decades to prevent and reduce the incidence of traumatic brain injury due to bicycle crashes and collisions. In some countries it is already compulsory to wear a bicycle helmet, while in others legislation is being considered.

When the bicycle helmet is not in use it is commonly hung by its straps from the handlebars, carried in or attached to a rucksack, or simply carried by the user. Alternatively, the lock used to secure the actual bicycle is often passed through the air vents or straps of the bicycle helmet to avoid having to carry it around and ensure it too is not stolen.

There also are situations when a cyclist may not be riding their bicycle, but may pushing it. Examples of this may be when they have to push it where cycling is not permitted, when having to wheel it onto a train, or when they are unable to cycle uphill due to the severity of the gradient. In these situations cyclists often remove their helmets for comfort and resort to hanging their helmets from the handlebars. This is can be very frustrating as the helmet swings freely, sometimes getting in the way and making it difficult to control the bicycle. Also, when hanging by the straps, the helmet straps can loosen requiring the straps to be readjusted every time it is donned by the user.

In the home, school, college, office or other workplace setting users may not want to leave their helmets outside, exposed to the elements yet it can be difficult to store bicycle helmets tidily, conveniently and securely. They are often placed on shelves or hung from coat hangers by their straps, none of which is an ideal solution.

DE-U-202006008019 discloses a bicycle helmet holder which comprises a mount component adapted to attach the holder to a surface, e.g. a bicycle, a first arm attached to the mount component and comprising a trough, a second arm attached to the mount component and comprising a trough, the arms locating with and holding the helmet.

According to the invention there is provided a bicycle helmet holder comprising a mount component adapted to attach the holder to a surface, a first arm attached to the mount component and comprising a trough, a second arm attached to the mount component and comprising a trough, wherein the second arm comprises an elastic material, such that the trough of the second arm can locate with a first end of an air vent of a helmet, the second arm can flex towards the first arm, the trough of the first arm can locate with a second end of the air vent of the helmet, and, on release, the second arm can flex away from the first arm to grip the helmet, the elastic material of the second arm allowing the second arm to spring away from the first arm when released.

The first arm may extend from the mount component in a first direction and the second arm may extend from the mount component in a second direction, which directions may be at an angle of approximately 90° to each other.

The first arm may be substantially straight. The second arm may be curved towards the first arm. The second arm may comprise a first portion proximal to and extending from the mount component at an angle of approximately 90° and a second portion distal to the mount component and extending from the first portion at an angle of approximately 90°.

The first arm may have a width dimension which is greater than a width dimension of the second arm, to provide stiffness of the first arm and flexibility of the second arm. The width dimension of the first arm may be approximately four times the width dimension of the second arm.

The first arm may have a width dimension of approximately 20mm, a length dimension of approximately 60mm and a depth dimension of approximately 6mm, which dimensions may provide stiffness of the arm to minimise flex, and rotational and shear movements of the arm. The stiffness of the first arm may be approximately 200N/m.

The second arm may have a width dimension of approximately 5mm, a length dimension of approximately 90mm and a depth dimension of approximately 9mm, which dimensions may provide flexibility to allow the second arm to flex towards the first arm.

The elastic material of the second arm may comprise polypropylene. The polypropylene elastic material may further comprise glass fibre.

The trough of the first arm may comprise a base portion, a first prong provided by the first arm and extending from the base portion and a second prong provided by the mount component and extending away from the base portion. The base portion may have a length dimension of approximately 40mm, and the first and second prongs may have a length dimension of approximately 14mm, which dimensions may be such that, when the helmet is attached to the holder, the second end of the air vent remains in position in the trough of the first arm.

The trough of the second arm may comprise a base portion, a first prong extending from the base portion at an angle of approximately 20° from perpendicular and a second prong extending from the base portion at an angle of approximately 20° from perpendicular, which angles may be such that, when the helmet is attached to the holder, the first end of the air vent remains in position in the trough. The base portion may have a length dimension of approximately 15mm, the first prong may have a length dimension of approximately 20mm, and the second prong may have a length dimension of approximately 20mm, which dimensions may be such that, when the helmet is attached to the holder, the first end of the air vent remains in position in the trough of the second arm.

The mount component may be substantially cylindrical to be adapted to attach the bicycle helmet holder to a surface comprising tubing of a bicycle. The mount component may be flexible to allow it to conform to the diameter of the tubing. The mount component may comprise first and second protrusions which, together, form a clamp adapted to retain the bicycle helmet holder on the tubing of the bicycle. The first and second protrusions may each provide an aperture therethrough, adapted for receipt of a retaining screw. With a bicycle helmet in place, access to the retaining screw may be prevented. The tubing may be a handlebar or a seat post of the bicycle.

The mount component may be substantially semi-circular to be adapted to attach the bicycle helmet holder to a surface. The semi-circular mount component may provide at least one aperture therethrough, adapted for receipt of a retaining screw. With a bicycle helmet in place, access to the retaining screw may be prevented. The surface may comprise a surface of any of a wall, door, peg rail.

The first prong of the first arm of the bicycle helmet holder may provide an aperture adapted to receive a lock which prevents a bicycle helmet being removed from the holder.

The bicycle helmet holder may comprise a retracting cable lock. The cable lock may be integrated within the mount component of the holder. The cable lock may be extended by a user, passed through a bicycle helmet, and then locked to secure the helmet to the holder.

The bicycle helmet holder may be fitted with one or more lights. A light may be integrated within the or each arm of the holder. The or each light may comprise one or more light emitting diodes (LEDs). The or each light may be operated by a switch and powered by one or more batteries.

The bicycle helmet holder may be fitted with a short messaging service (SMS) messaging unit. The messaging unit may comprise a key pad. The messaging unit may be integrated within the mount component. The messaging unit may send a pre-programmed SMS text message to a predetermined number when a predetermined number sequence is typed into the keypad. This feature of the bicycle helmet holder may be used to enhance child safety, by allowing parents to be alerted to their child's location.

The bicycle helmet holder may be fitted with a global positioning system (GPS) tracker. The tracker may be integrated within the mount component of the holder. The bicycle helmet holder may be fitted with a screen for displaying GPS information, such as cycling data comprising distance and average speed. The screen may be integrated within the mount component of the holder. The screen may be a liquid crystal display (LCD) screen.

Alternatively, the bicycle helmet holder may comprise a GPS information receiver. The receiver may comprise a screen. The receiver may receive GPS information from a GPS tracking chip mounted on a bicycle helmet when the helmet is mounted onto the helmet holder. The GPS information may comprise cycling data such as distance and average speed. The GPS information may be viewed on the screen.

A bicycle helmet may be fitted to the bicycle helmet holder using only one hand to maximise its ease of use.

The present invention has a number of objects and provides a number of advantages over existing bicycle helmet holders. The bicycle helmet holder of the invention can be easily used with a majority of types of bicycle helmets, as at present available on the market. The bicycle helmet holder permits a bicycle helmet to be attached to the holder by using air vents found in the majority of bicycle helmets at present available on the market. Embodiments of the bicycle helmet holder allows a bicycle helmet to be attached to a bicycle as well as stored conveniently by mounting on a wall or to any other fixed surface such as a door, door frame or peg rail. The bicycle helmet holder allows a bicycle helmet to be attached securely to a bicycle and locked preventing it from being stolen. The bicycle helmet holder allows a bicycle helmet to be attached securely to a bicycle or wall etc., preventing the helmet from accidentally falling. By providing an easy to use, effective and secure method of attaching, securing and locking a helmet to a holder, cyclists will be encouraged to use helmets and so improve their personal safety. By having the bicycle helmet holder attached to the bicycle when not in use it would make it more likely for children and adults to have their bicycle helmets to hand, and so encourage usage. By having the bicycle helmet holder produced in a range of colours, it can be complementary to the look of the bicycle and complementary to, and as obvious or unobtrusive as desired, to the wall etc. decor to which it is mounted.

Further characteristics and advantages of the present invention will become more apparent hereinafter from the following detailed disclosure of preferred, though not exclusive, embodiments of the invention, which are illustrated, by way of indicative, but not limitative, examples in the accompanying drawings, in which:
Figure 1 is a perspective view of a first embodiment of a bicycle helmet holder according to the invention;
Figure 2 is a side view of the bicycle helmet holder of Figure 1;
Figure 3 is a top view of the bicycle helmet holder of Figure 1 and Figure 2;
Figure 4 is a perspective view of a second embodiment of a bicycle helmet holder according to the invention;
Figure 5 is a side view of the bicycle helmet holder of Figure 4;
Figure 6 is a top view of the bicycle helmet holder of Figure 4 and Figure 5;
Figure 7 is a view of the first embodiment of the bicycle helmet holder compressed prior to being fully engaged with bicycle helmet air vents;
Figure 8 is a view of the first embodiment of the bicycle helmet holder attached to the helmet;
Figure 9 is a view of a method of locking the first embodiment of the bicycle helmet holder to the helmet by use of a lock;
Figure 10 is a side view of a third embodiment of a bicycle helmet holder according to the invention incorporating a LED;
Figure 11 is a side view of a fourth embodiment of a bicycle helmet holder according to the invention incorporating a retractable cable lock;
Figure 12 is a perspective view of a fifth embodiment of a bicycle helmet holder according to the invention incorporating a LCD screen;
Figure 13 is a perspective view of a sixth embodiment of a bicycle helmet holder according to the invention incorporating a keypad for sending SMS messages;
Figure 14 is a side view of a seventh embodiment of a bicycle helmet holder according to the invention, and
Figure 15 is a side view of an eighth embodiment of a bicycle helmet holder according to the invention.

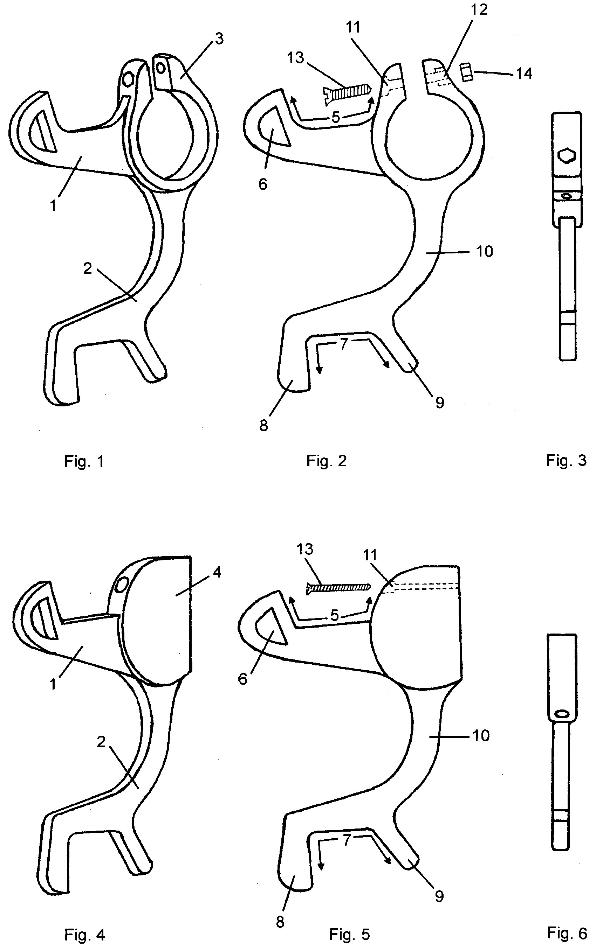

Referring to Figures 1 to 3, a first embodiment of a bicycle helmet holder adapted to be attached to a bicycle is described. The bicycle helmet holder comprises a first arm 1, a second arm 2 and a mount component 3. The first arm 1 is attached to and extends from the mount component 3 in a first direction and the second arm 2 is attached to and extends from the mount component 3 in a second direction, which directions are at an angle of approximately 90° to each other.

The first arm 1 is substantially straight. The second arm 2 is curved towards the first arm 1. The second arm 2 comprises a first portion 10 (see Figure 2) proximal to and extending from the mount component 3 at an angle of approximately 90° and a second portion distal to the mount component 3 and extending from the first portion 10 at an angle of approximately 90°.

The first arm 1 has a width dimension which is greater than a width dimension of the second arm 2, to provide stiffness of the first arm 1 and flexibility of the second arm 2. The width dimension of the first arm 1 is approximately four times the width dimension of the second arm 2.

The first arm 1 has a width dimension of approximately 20mm, a length dimension of approximately 60mm and a depth dimension of approximately 6mm, which dimensions provide stiffness of the arm to minimise flex, rotation forces and shear forces of the first arm 1.

The first arm 1 comprises a trough 5. This comprises a base portion, a first prong provided by the first arm 1 and extending from the base portion and a second prong provided by the mount component 3 and extending away from the base portion. The base portion has a length dimension of approximately 40mm, and the first and second prongs have a length dimension of approximately 14mm, which dimensions are such that, when a helmet is attached to the holder, a second end of an air vent of the helmet remains in position in the trough 5 of the first arm 1.

The second arm 2 has a width dimension of approximately 5mm, a length dimension of approximately 90mm and a depth dimension of approximately 9mm, which dimensions provide flexibility to allow the second arm 2 to flex towards the first arm 1. The second arm 2 comprises an elastic material to allow the second arm 2 to spring away from the first arm 1 when released. The elastic material comprises polypropylene reinforced with either 20% or 30% glass fibre.

The second arm 2 comprises a trough 7. This comprises a base portion, a first prong 8 extending from the base portion at an angle of approximately 20° from perpendicular and a second prong 9 extending from the base portion at an angle of approximately 20° from perpendicular, which angles are such that, when a helmet is attached to the holder, a first end of an air vent of the helmet remains in position in the trough 7 of the second arm 2. The base portion has a length dimension of approximately 15mm, the first prong has a length dimension of approximately 20mm, and the second prong has a length dimension of approximately 20mm, which dimensions are such that, when the helmet is attached to the holder, the first end of the air vent remains in position in the trough 7 of the second arm 2. The length dimension of the prongs 8, 9 of the trough 7 of the second arm 2 need to be greater than the length dimension of the prongs of the trough 5 of the first arm 1. This is because, as the second arm 2 is flexed to accommodate the differing sizes of helmet air vents, its angle of orientation changes and so a deeper trough accommodates this, so keeping the helmet secure.

The physical characteristics of the second arm 2 is a crucial element of the invention. This arm should have sufficient vertical flexibility to allow it to flex towards the first arm 1. The second arm 2 should possess sufficient properties of stiffness and elasticity to spring back when released, so as to engage with the helmet air vent and hold the helmet securely. While there is a requirement for the second arm 2 to be flexible in the plane of the arms, there should be greater levels of stiffness in the two other planes of movement, as well as all three axes of torsion to ensure that the trough 7 is engaged securely with the helmet. The second arm 2 should have a high degree of elasticity and low levels of plasticity, as well as the correct material properties to ensure it maintains its physical properties throughout its life-time. These requirements may be attained by the material used as well as its dimensions.

The first prong of the first arm 1 of the bicycle helmet holder provides an aperture 6 adapted to receive a lock which prevents a bicycle helmet being removed from the holder. The aperture 6 is of sufficient minimum diameter to allow the shackle of a padlock, or other such commonly available lock, to pass through it. The aperture 6 is irregular to suit the aesthetics of the design of the holder. The material used for the holder should be of sufficient stiffness and strength to provide a reasonable anchor point for a padlock or other such commonly available lock to be attached.

In this embodiment of the bicycle helmet holder, the mount component 3 is substantially cylindrical to be adapted to attach the bicycle helmet holder to a surface comprising tubing of a bicycle. The tubing to which the bicycle helmet holder is attached may be a handlebar or a seat post of the bicycle. The mount component 3 is flexible to allow it to conform to the diameter of the tubing. The mount component 3 comprises first and second protrusions which, together, form a clamp adapted to retain the bicycle helmet holder on the tubing of the bicycle. The first and second protrusions provide apertures 11, 12 therethrough, adapted for receipt of a retaining screw 13 and a nut 14. The retaining screw 13 is inserted through the aperture 11 provided by the first protrusion and into the aperture 12 provided by the first protrusion of the clamp. The nut 14 is inserted into the aperture 12 and is tightened together with the screw 13. The depth of the aperture 11 is sufficient to allow the retaining screw 13 to sit below an outer surface of the mount component 3 when the screw is fully inserted. This is to avoid any sharp edges of the screw 13 being exposed, which may cause injury to a user of the holder or damage to the helmet. It will also help to prevent access to the screw 13 when the helmet is locked in place, so reducing the risk of theft. The depth of the aperture 12 is similarly sufficient to ensure that, when fully tightened, the retaining screw 13 does not protrude beyond an outer surface of the mount component 3. This is also to avoid any sharp edges of the screw 12 being exposed, which may cause injury to a user.

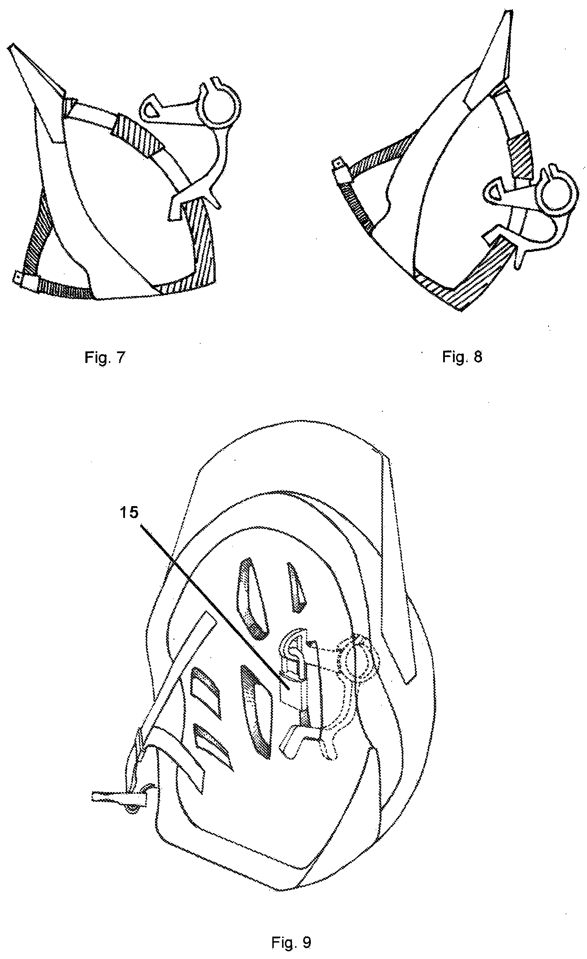

Referring to Figures 7 to 9, operation of the bicycle helmet holder is described. The majority of bicycle helmets have air or cooling vents in their outer structure. The main object of these vents is to allow air flow and so provide cooling to the cyclists head. These vents generally tend to be of an oblong shape. There are some variations in the size of these vents between bicycle helmet manufacturers, between models of helmet and also within different areas of the same helmet. The current invention is designed so it can be fitted to vents of various sizes. Therefore, it is suitable for bicycle helmets from a range of manufacturers, models and may be fitted to a number of vents in a particular helmet. To use the first embodiment of the bicycle helmet holder, a user holds the convex or outer surface of the helmet orientated towards the helmet holder, and locates the trough 7 of the second arm 2 in a first end of an air vent in the helmet, as shown in Figure 7. Then, as the second arm 2 is flexible, the user pulls the helmet until a second end of the air vent can be located into the trough 5 of the first arm 1.

Upon releasing the helmet the elasticity of the second arm 2 and the rigidity of the first arm 1, allows the troughs 7 and 5 to grip the helmet, as shown in Figure 8.

To lock the helmet to the bicycle helmet holder, the aperture 6 provided by the first arm 1 is utilised. With the helmet fitted to the holder, a standard padlock 15 is inserted through the aperture 6 and the padlock is locked in place, as shown in Figure 9. The minimum diameter of the aperture 6 is sufficient to allow a range of lock sizes to be used. The width of helmet vents varies, so the user must select a lock of sufficient size so it cannot be pulled through the helmet vent.

Referring to Figures 4 to 6, a second embodiment of a bicycle helmet holder adapted to be attached to a surface of a wall, door, peg rail etc. is described. This embodiment of the bicycle helmet holder comprises a first arm 1 and a second arm 2 as previously described and a mount component 4. The mount component 4 is substantially semi-circular to be adapted to attach the bicycle helmet holder to the surface. The semi-circular mount component 4 provides an aperture 11 therethrough, adapted for receipt of a retaining screw 13. The mount component 4 is screwed onto the surface of the wall etc. The aperture 11 allows the retaining screw 13 to be inserted therethrough and into the surface to which it will be securely attached. The depth of the aperture 11 is sufficient to allow the screw 13 to sit below an outer surface of the mount component 4 when the screw 13 is fully inserted. This is to avoid any sharp edges of the screw 13 being exposed, which may cause injury to a user or damage to the helmet. It will also help to prevent access to the screw 13 when the helmet is locked in place, so reducing the risk of theft. The second embodiment of the bicycle helmet holder has a helmet fitted to it in the same way as the first embodiment of the bicycle helmet holder.

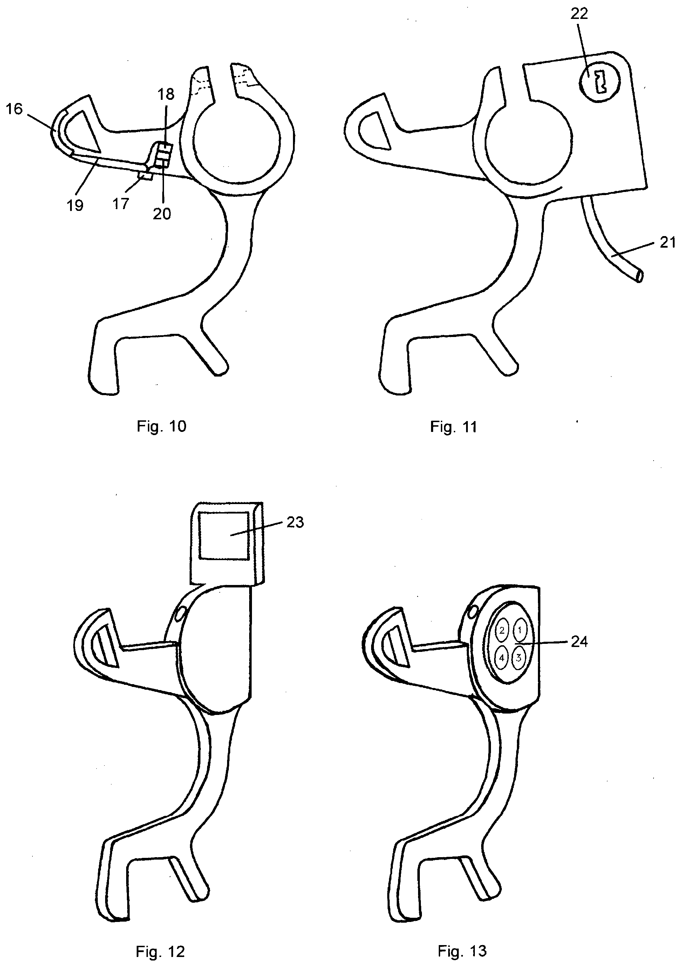

Referring to Figure 10, a third embodiment of a bicycle helmet holder is described. The bicycle helmet holder comprises a first arm 1, a second arm 2 and a mount component 3, as previously described. The bicycle helmet holder incorporates a LED 16 which is operated by a switch 17, controlled by a control unit 18, connected to the LED 16 by internal wiring 19. The LED is powered by batteries 20.

Referring to Figure 11, a fourth embodiment of a bicycle helmet holder is described. The bicycle helmet holder comprises a first arm 1, a second arm 2 and a mount component 3, as previously described. The bicycle helmet holder incorporates a retracting cable lock 21. The cable of the lock can be extended by a user, passed through the helmet, and then locked using the integrated lock 22.

Referring to Figure 12, a fifth embodiment of a bicycle helmet holder is described. The bicycle helmet holder comprises a first arm 1, a second arm 2 and a mount component 3, as previously described. The bicycle helmet holder has a small LCD screen 23. A GPS tracking chip mounted on the helmet transfers GPS cycling data such as distance and average speed wirelessly, when the helmet is remounted onto the helmet holder. This received data can then be viewed on the screen 23.

Referring to Figure 13, an sixth embodiment of a bicycle helmet holder is described. The bicycle helmet holder comprises a first arm 1, a second arm 2 and a mount component 3, as previously described. The bicycle helmet holder has a SMS messaging unit. This is provided to enhance child safety, by allowing parents to be alerted to their child's location. A pre-programmed SMS message can be sent to a designated mobile telephone number or numbers when a particular number sequence is typed into the keypad 24. The messaging unit can send two different messages, through the typing in of two different number sequences. For example, the number sequence 2,5,0 could send the message "Arrived safely", and 3,2,4 could send the message "Leaving now". The use of the keypad 24 ensures that messages are not sent in error, or by anyone other than those it is meant for.

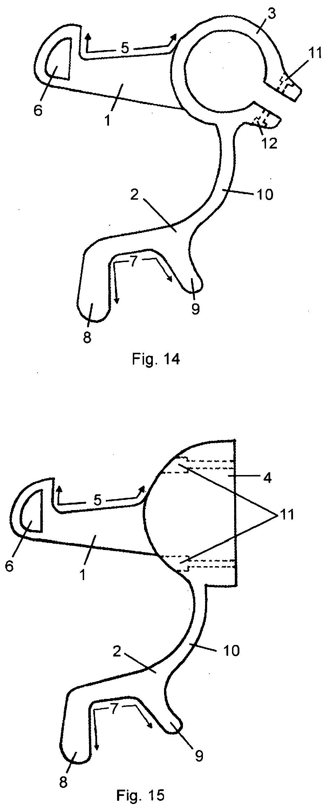

Referring to Figure 14, a seventh embodiment of a bicycle helmet holder is described. The bicycle helmet holder comprises a first arm 1, a second arm 2 and a mount component 3, as previously described. In this embodiment, the first and second protrusions which, together, form a clamp adapted to retain the bicycle helmet holder on tubing of a bicycle are positioned on the mounting component 3 approximately opposite the first arm 1. This allows the clamp projections, and a screw (not shown) used to hold them together, to be positioned away from a user of the holder when this is attached to a handlebar of a bicycle. In this embodiment, when a helmet is in place, it will not prevent access to the screw. The clamp can therefore be provided with a tamper-proof screw. In this embodiment, the mounting component 3 may be provided with a substantially cylindrical insert (not shown), which is held in place within the mounting component 3 by a tongue and groove arrangement. The insert allows the holder to be fitted to a greater range of sizes of bicycle tubing.

Referring to Figure 15, an eighth embodiment of a bicycle helmet holder is described, which holder is adapted to be attached to a surface of a wall, door, peg rail etc. This embodiment of the bicycle helmet holder comprises a first arm 1, a second arm 2 and a mount component 4, as previously described with reference to Figures 4 to 6. In this embodiment, the mount component 4 comprises two apertures 11 each receiving a retaining screw (not shown) to attach the holder to the surface. Again, the depths of the apertures 11 are sufficient to allow the screws to sit below an outer surface of the mount component 4 when fully inserted, to avoid exposure of any sharp edges of the screws.

## Claims

1. A bicycle helmet holder comprising a mount component (3) adapted to attach the holder to a surface, a first arm (1) attached to the mount component (3) and comprising a trough (5), a second arm (2) attached to the mount component (3) and comprising a trough (7), **characterised in that** the second arm comprises an elastic material, such that the trough (7) of the second arm (2) can locate with a first end of an air vent of a helmet, the second arm (2) can flex towards the first arm (1), the trough (5) of the first arm (1) can locate with a second end of the air vent of the helmet, and, on release, the second arm (2) can flex away from the first arm (1) to grip the helmet, the elastic material of the second arm (2) allowing the second arm (2) to spring away from the first arm (1) when released.

2. A bicycle helmet holder according to claim 1 in which the first arm (1) extends from the mount component (3) in a first direction and the second arm (2) extends from the mount component (3) in a second direction, which directions are at an angle of approximately 90° to each other.

3. A bicycle helmet holder according to claim 1 or claim 2 in which the first arm (1) is substantially straight and the second arm (2) is curved towards the first arm (1).

4. A bicycle helmet holder according to claim 3 in which the second arm (2) comprises a first portion (10) proximal to and extending from the mount component (3) at an angle of approximately 90° and a second portion distal to the mount component (3) and extending from the first portion (10) at an angle of approximately 90°.

5. A bicycle helmet holder according to any preceding claim in which the first arm (1) has a width dimension which is greater than a width dimension of the second arm (2), to provide stiffness of the first arm (1) and flexibility of the second arm (2).

6. A bicycle helmet holder according to any preceding claim in which the first arm (1) has a width dimension of approximately 20mm, a length dimension of approximately 60mm and a depth dimension of approximately 6mm, which dimensions provide stiffness of the arm to minimise flex, rotation forces and shear forces of the arm.

7. A bicycle helmet holder according to any preceding claim in which the second arm (2) has a width dimension of approximately 5mm, a length dimension of approximately 90mm and a depth dimension of approximately 9mm, which dimensions provide flexibility to allow the second arm (2) to flex towards the first arm (1).

8. A bicycle helmet holder according to any preceding claim in which the elastic material comprises polypropylene reinforced with glass fibre.

9. A bicycle helmet holder according to any preceding claim in which the trough (5) of the first arm (1) comprises a base portion of length dimension of approximately 40mm, a first prong of length dimension of approximately 14mm provided by the first arm and extending from the base portion and a second prong of length dimension of approximately 14mm provided by the mount component (3) and extending away from the base portion, which dimensions are such that, when the helmet is attached to the holder, the second end of the air vent remains in position in the trough (5) of the first arm (1).

10. A bicycle helmet holder according to any preceding claim in which the trough (7) of the second arm (2) comprises a base portion of length dimension of approximately 15mm, a first prong (8) of length dimension of approximately 20mm extending from the base portion at an angle of approximately 20° from perpendicular and a second prong (9) of length dimension of approximately 20mm extending from the base portion at an angle of approximately 20° from perpendicular, which dimensions and angles are such that, when the helmet is attached to the holder, the first end of the air vent remains in position in the trough (7).

11. A bicycle helmet holder according to any preceding claim in which the mount component (3) is substantially cylindrical to be adapted to attach the bicycle helmet holder to a surface comprising tubing of a bicycle and is flexible to allow it to conform to the diameter of the tubing.

12. A bicycle helmet holder according to any of claims 1 to 10 in which the mount component (3) is substantially semi-circular to be adapted to attach the bicycle helmet holder to a surface.

13. A bicycle helmet holder according to any preceding claim in which the first prong of the first arm (1) of the bicycle helmet holder provides an aperture (6) adapted to receive a lock which prevents a bicycle helmet being removed from the holder.

14. A bicycle helmet holder according to any preceding claim fitted with a global positioning system (GPS) tracker, and a screen for displaying GPS information.

## Patentansprüche

1. Fahrradhelmhalter, der aufweist: eine Aufhängungskomponente (3), die zur Anbringung des Halters an einer Oberfläche ausgeführt ist, einen ersten Arm (1), der an der Aufhängungskomponente (3) angebracht ist und eine Ausnehmung (5) aufweist, einen zweiten Arm (2), der an der Aufhängungskomponente (3) angebracht ist und eine Ausnehmung (7) aufweist, **dadurch gekennzeichnet, dass** der zweite Arm ein elastisches Material aufweist, so dass die Ausnehmung (7) des zweiten Arms (2) an einem ersten Ende eines Lüftungsschlitzes eines Helms in Anlage kommen kann, der zweite Arm (2) sich zum ersten Arm (1) hin biegen kann, die Ausnehmung (5) des ersten Arms (1) an einem zweiten Ende des Lüftungsschlitzes des Helms in Anlage kommen kann und der zweite Arm (2) bei Freigabe sich von dem ersten Arm (1) weg biegen kann, um den Helm zu haltern, wobei das elastische Material des zweiten Arms (2) den zweiten Arm (2) bei Freigabe vom ersten Arm (1) wegschnellen lässt.

2. Fahrradhelmhalter nach Anspruch 1, bei dem sich der erste Arm (1) in einer ersten Richtung von der Aufhängungskomponente (3) erstreckt und der zweite Arm (2) sich in einer zweiten Richtung von der Aufhängungskomponente (3) erstreckt, wobei diese Richtungen in einem Winkel von etwa 90° zueinander sind.

3. Fahrradhelmhalter nach Anspruch 1 oder Anspruch 2 bei dem der erste Arm (1) im Wesentlichen gerade ist und der zweite Arm (2) zum ersten Arm (1) hin gekrümmt ist.

4. Fahrradhelmhalter nach Anspruch 3, bei dem der zweite Arm (2) einen zur Aufhängungskomponente (3) proximalen und sich in einem Winkel von etwa 90° von ihr erstreckenden ersten Teil (10) und einen zur Aufhängungskomponente (3) distalen und sich in einem Winkel von etwa 90° von dem ersten Teil (10) erstreckenden zweiten Teil aufweist.

5. Fahrradhelmhalter nach einem der vorhergehenden Ansprüche, bei dem der erste Arm (1) eine Breitenabmessung hat, die größer als eine Breitenabmessung des zweiten Arms (2) ist, um Steifigkeit des ersten Arms (1) und Flexibilität des zweiten Arms (2) zu ergeben.

6. Fahrradhelmhalter nach einem der vorhergehenden Ansprüche, bei dem der erste Arm (1) eine Breitenabmessung von etwa 20 mm, eine Längenabmessung von etwa 60 mm und eine Tiefenabmessung von etwa 6 mm hat, wobei diese Abmessungen Steifigkeit des Arms ergeben, um Beugung, Drehkräfte und Scherkräfte des Arms zu minimieren.

7. Fahrradhelmhalter nach einem der vorhergehenden Ansprüche, bei dem der zweite Arm (2) eine Breitenabmessung von etwa 5 mm, eine Längenabmessung von etwa 90 mm und eine Tiefenabmessung von etwa 9 mm hat, wobei diese Abmessungen Flexibilität ergeben, damit sich der zweite Arm (2) zum ersten Arm (1) hin biegen kann.

8. Fahrradhelmhalter nach einem der vorhergehenden Ansprüche, bei dem das elastische Material glasfaserverstärktes Polypropylen aufweist.

9. Fahrradhelmhalter nach einem der vorhergehenden Ansprüche, bei dem die Ausnehmung (5) des ersten Arms (1) einen Basisteil mit einer Längenabmessung von etwa 40 mm, einen von dem ersten Arm bereitgestellten und sich von dem Basisteil erstreckenden ersten Zacken mit einer Längenabmessung von etwa 14 mm und einen von der Aufhängungskomponente (3) bereitgestellten und sich von dem Basisteil weg erstreckenden zweiten Zacken mit einer Längenabmessung von etwa 14 mm aufweist, wobei diese Abmessungen dergestalt sind, dass, wenn der Helm an dem Halter angebracht ist, das zweite Ende des Luftschlitzes in der Ausnehmung (5) des ersten Arms (1) positioniert bleibt.

10. Fahrradhelmhalter nach einem der vorhergehenden Ansprüche, bei dem die Ausnehmung (7) des zweiten Arms (2) einen Basisteil mit einer Längenabmessung von etwa 15 mm, einen ersten Zacken (8) mit einer Längenabmessung von etwa 20 mm, der sich in einem Winkel von etwa 20° zur Senkrechten von dem Basisteil erstreckt, und einen zweiten Zacken (9) mit einer Längenabmessung von etwa 20 mm, der sich in einem Winkel von etwa 20° zur Senkrechten von dem Basisteil erstreckt, aufweist, wobei diese Abmessungen und Winkel dergestalt sind, dass, wenn der Helm an dem Halter angebracht ist, das erste Ende des Luftschlitzes in der Ausnehmung (7) positioniert bleibt.

11. Fahrradhelmhalter nach einem der vorhergehenden Ansprüche, bei dem die Aufhängungskomponente (3) im Wesentlichen zylindrisch ist, um zur Anbringung des Fahrradhelmhalters an einer Oberfläche ausgeführt zu sein, die ein Rohr eines Fahrrads umfasst, und flexibel ist, so dass sie sich an den Durchmesser des Rohrs anpassen kann.

12. Fahrradhelmhalter nach einem der Ansprüche 1 bis 10, bei dem die Aufhängungskomponente (3) im Wesentlichen halbkreisförmig ist, um zur Anbringung des Fahrradhelmhalters an einer Oberfläche ausgeführt zu sein.

13. Fahrradhelmhalter nach einem der vorhergehenden Ansprüche, bei dem der erste Zacken des ersten Arms (1) des Fahrradhelmhalters eine Öffnung (6) bereitstellt, die zur Aufnahme eines Schlosses ausgeführt ist, das das Entfernen eines Fahrradhelms vom Halter verhindert.

14. Fahrradhelmhalter nach einem der vorhergehenden Ansprüche, der mit einem Global Positioning System-(GPS) -Tracker und einem Bildschirm zum Anzeigen von GSP-Informationen versehen ist.

## Revendications

1. Support de casque de bicyclette comprenant un composant de montage (3) conçu pour attacher le support à une surface, un premier bras (1) attaché au composant de montage (3), et comprenant une partie en creux (5), un deuxième bras (2) attaché au composant de montage (3) et comprenant une partie en creux (7), **caractérisé en ce que** le deuxième bras est composé d'une matière élastique de telle sorte que la partie en creux (7) du deuxième bras (2) peut s'aligner avec une première extrémité d'un évent d'air d'un casque, le deuxième bras (2) peut fléchir vers le premier bras (1), la partie en creux (5) du premier bras (1) peut s'aligner avec une deuxième extrémité de l'évent d'air du casque, et, lors de sa libération, le deuxième bras (2) peut fléchir pour s'éloigner du premier bras (1) afin d'agripper le casque, la matière élastique du deuxième bras (2) permettant au deuxième bras (2) de s'écarter par effet ressort du premier bras (1) lors de sa libération.

2. Support de casque de bicyclette selon la revendication 1, dans lequel le premier bras (1) s'étend à partir du composant de montage (3) suivant un premier sens et le deuxième bras (2) s'étend à partir du composant de montage (3) suivant un deuxième sens, ces sens se situant à un angle d'environ 90° l'un par rapport à l'autre.

3. Support de casque de bicyclette selon la revendication 1 ou la revendication 2, dans lequel le premier bras (1) est sensiblement rectiligne et le deuxième bras (2) est incurvé vers le premier bras (1).

4. Support de casque de bicyclette selon la revendication 3, dans lequel le deuxième bras (2) comprend une première portion (10) laquelle est proximale du composant de montage (3), et s'étend à partir de ce dernier, suivant un angle d'environ 90°, et une deuxième portion laquelle est distale du composant de montage (3) et s'étend à partir de la première portion (10) suivant un angle d'environ 90°.

5. Support de casque de bicyclette selon l'une quelconque des revendications précédentes, dans lequel le premier bras (1) a une dimension en largeur qui est plus grande qu'une dimension en largeur du deuxième bras (2), afin de procurer la rigidité du premier bras (1) et la flexibilité du deuxième bras (2).

6. Support de casque de bicyclette selon l'une quelconque des revendications précédentes, dans lequel le premier bras (1) a une dimension en largeur d'environ 20 mm, une dimension en longueur d'environ 60 mm et une dimension en profondeur d'environ 6 mm, ces dimensions procurant la rigidité du bras afin de minimiser la flexion, les forces de rotation et les forces de cisaillement du bras.

7. Support de casque de bicyclette selon l'une quelconque des revendications précédentes, dans lequel le deuxième bras (2) a une dimension en largeur d'environ 5 mm, une dimension en longueur d'environ 90 mm et une dimension en profondeur d'environ 9 mm, ces dimension procurant la flexibilité pour permettre au deuxième bras (2) de fléchir vers le premier bras (1).

8. Support de casque de bicyclette selon l'une quelconque des revendications précédentes, dans lequel la matière élastique comprend du polypropylène renforcé aux fibres de verre.

9. Support de casque de bicyclette selon l'une quelconque des revendications précédentes, dans lequel la partie en creux (5) du premier bras (1) comprend une portion base ayant une dimension en longueur d'environ 40 mm, une première fourche d'une dimension en longueur d'environ 14 mm procurée par le premier bras et s'étendant à partir de la portion base, et une deuxième fourche ayant une dimension en longueur d'environ 14 mm procurée par le composant de montage (3) et s'éloignant en prolongement à partir de la portion base, ces dimensions étant telles que, lorsque le casque est attaché au support, la deuxième extrémité de l'évent d'air reste en position dans la partie en creux (5) du premier bras (1).

10. Support de casque de bicyclette selon l'une quelconque des revendications précédentes, dans lequel la partie en creux (7) du deuxième bras (2) comprend une portion base ayant une dimension en longueur d'environ 15 mm, une première fourche (8) d'une dimension en longueur d'environ 20 mm s'étendant à partir de la portion base suivant un angle d'environ 20° par rapport au plan perpendiculaire, et une deuxième fourche (9) ayant une dimension en longueur d'environ 20 mm s'étendant à partir de la portion base suivant un angle d'environ 20° par rapport au plan perpendiculaire, ces dimensions et ces angles étant tels que, lorsque le casque est attaché au support, la première extrémité de l'évent d'air reste en position dans la partie en creux (7).

11. Support de casque de bicyclette selon l'une quelconque des revendications précédentes, dans lequel le composant de montage (3) est sensiblement cylindrique pour convenir à la fixation du support de casque de bicyclette sur une surface comprenant le tubage d'une bicyclette, et est souple pour lui permettre de prendre la forme du diamètre du tubage.

12. Support de casque de bicyclette selon l'une quelconque des revendications 1 à 10, dans lequel le composant de montage (3) est sensiblement semi-circulaire pour convenir à la fixation du support de casque de bicyclette sur une surface.

13. Support de casque de bicyclette selon l'une quelconque des revendications précédentes, dans lequel la première fourche du premier bras (1) du support de casque de bicyclette procure une ouverture (6) laquelle convient à la réception d'un cadenas qui empêche d'enlever le casque de bicyclette au niveau du support.

14. Support de casque de bicyclette, selon l'une quelconque des revendications précédentes, équipé d'un suiveur GPS (positionnement global par satellite), et d'un afficheur pour afficher les informations GPS.
